(19) Europäisches Patentamt
European Patent Office
Office européen des brevets

(11) EP 3 515 192 B1

(12) **EUROPEAN PATENT SPECIFICATION**

(45) Date of publication and mention of the grant of the patent:
**03.03.2021 Bulletin 2021/09**

(21) Application number: **17852527.5**

(22) Date of filing: **25.09.2017**

(51) Int Cl.:
*A01N 43/40* (2006.01) *A01N 57/02* (2006.01)
*A01P 13/00* (2006.01)

(86) International application number:
**PCT/IB2017/055792**

(87) International publication number:
**WO 2018/055583 (29.03.2018 Gazette 2018/13)**

(54) **A PROCESS OF CONTROLLING WEEDS**

VERFAHREN ZUR BEKÄMPFUNG VON UNKRÄUTERN

PROCÉDÉ DE LUTTE CONTRE LES MAUVAISES HERBES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2016 IN 201631032821**

(43) Date of publication of application:
**31.07.2019 Bulletin 2019/31**

(73) Proprietor: **UPL Limited**
**Haldia, West Bengal 721 602 (IN)**

(72) Inventors:
- **BHOGE, Satish, Ekanath**
  **Maharashtra**
  **Mumbai 400 052 (IN)**
- **TALATI, Paresh, Vithaldas**
  **Maharashtra**
  **Mumbai 400 052 (IN)**
- **SHROFF, Jaidev, Rajnikant**
  **Dubai (AE)**
- **SHROFF, Vikram, Rajnikant**
  **Dubai (AE)**

(74) Representative: **HGF**
**1 City Walk**
**Leeds LS11 9DX (GB)**

(56) References cited:
**CN-A- 103 688 994** **CN-A- 105 230 652**
**CN-A- 105 557 748** **US-A1- 2011 287 933**
**US-A1- 2013 252 813** **US-A1- 2015 157 022**
**US-A1- 2015 305 335** **US-B1- 7 105 470**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 515 192 B1

Printed by Jouve, 75001 PARIS (FR)

## Description

FIELD OF THE INVENTION

The present invention relates to a process of controlling weeds. More specifically, the invention relates to a process of controlling broadleaved weeds which are tolerant to certain herbicides.

BACKGROUND AND THE PRIOR ART

Weed control is an important practice for crops growth. The losses caused by weeds in agricultural production environments include reduced crop quality, increased irrigation costs, increased harvesting costs, and reduced land value, injury to livestock, and crop damage from insects and pests harboured by the weeds. There are several mechanisms by which weeds cause damage to crops. Weeds may compete with crop plants for the nutrients essential for growth and development. Weeds may produce toxic or irritant chemicals that cause human or animal health problem. Some of the weed varieties also produce immense quantities of seed or vegetative reproductive parts or both that contaminate agricultural products and perpetuate the species in agricultural lands.

Broadleaved weeds such as *commelina benghalensis, Euphoria hirta* and *Portulaca oleracea* are common weeds of subtropical region and frequently occur with crops such as cotton, soybean and rice; and also at roadsides, pavements and orchards. These broadleaved weeds are troublesome in many ways. Primarily, they reduce crop yield by competing for water, light, soil nutrients, and space. Several cases of resistance to common herbicides has been observed in these broadleaved weeds and posed challenge for an effective control.

*Commelina benghalensis* (Benghal dayflower), also known as tropical spiderwort, is a noxious broadleaved weed that infests many agricultural crops throughout the world (Holm et al. 1977). It produces aerial (above ground) and subterranean (below ground) flowers. This results in viable seed being produced both above and below ground. *Commelina benghalensis* also possesses the ability to root at the nodes and can be propagated from cut stems. Therefore, light cultivation can often break plant parts and increase the area of infestation. *Portulaca Oleracea,* also known as Purslane is an aggressive broadleaved weed and is considered a major problem in many crops throughout the world. Singh and Singh (1967) cite purslane as one of the ten most noxious weeds in the Upper Gangetic Plain of India and it is listed as a noxious weed by the state of Arizona (USDA, 2010). *Euphorbia hirta* is a pantropical broadleaved weed, possibly native to India. It is a hairy herb that grows in open grasslands, roadsides and pathways. *Euphorbia hirta* is distributed throughout the hotter parts of sub-tropical countries, often found in waste places along the roadsides.

Chemical herbicides have provided an effective way of controlling weeds over the years. Chemical herbicides can generally be applied pre-planting, pre-emergence and/or post-emergence. The use of chemical herbicides is sometimes the only practical and selective process of managing certain weeds. Herbicides control weeds by either stopping or changing the weed's normal growth patterns. It has been observed that weeds are capable of developing resistance to herbicides through genetic mutation and soon become tolerant to that particular herbicide. One of the frequently adopted practices to control tolerance is resistance management where two or more herbicide active substances with different mechanisms of actions are combined together and contribute the desired properties to control weed growth. The use of mixtures or sequences of herbicides with differing mechanism of actions are important especially to prevent or overcome resistance caused by single herbicides.

The combination of herbicides with a favourable profile of action allows the application rate to be reduced in comparison with the individual application of the herbicides to be combined and result into better control of weeds.

The chemical herbicide, such as Glufosinate (see Formula (I)) is an active compound (RS)-2-amino-4-[hydroxy(methyl)phosphinyl] butanoic acid, commercially available as monoammonium salt and is used as foliar herbicide (see DE-A-2717440, U.S. Pat. No. 4,168,963).

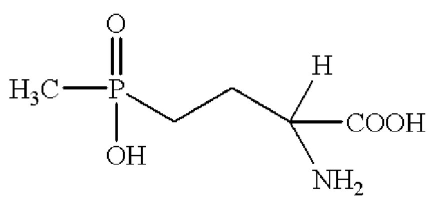

Formula I

Glufosinate ammonium is produced from phosphinic acid and is a non-selective herbicide. It can be used

effectively on all broad-leaved and grass weeds. Glufosinate ammonium is used globally to control weeds on all edible & non-edible crops, fruits & berries and grasslands. It acts by inhibiting the enzyme glutamine synthetase. It is applied as foliar spray and as soil treatment. However, Glufosinate ammonium is non-selective herbicide but it is now demonstrated that some of the weed population cannot be controlled by Glufosinate when used alone. The problem of Glufosinate resistance is because of high selection pressure exerted by Glufosinate on a weed population over several years.

Certain aryloxyphenoxypropionic acids exhibit selective herbicidal activity against weeds. In these compounds, the aryloxy group may be phenoxy, pyridinyloxy or quinoxalinyl.

Aryloxyphenoxypropionate herbicides are known to inhibit acetyl CoA carboxylase (ACCase) enzyme of most of the grassy weeds whereas their effect is less known on dicotyledons. One such herbicidal aryloxyphenoxypropionic acid is Haloxyfop, {2-[4-[[3-chloro-5-(trifluoromethyl)-2-pyridinyl]oxy]phenoxy]-propanoic acid}, (shown as Formula II).

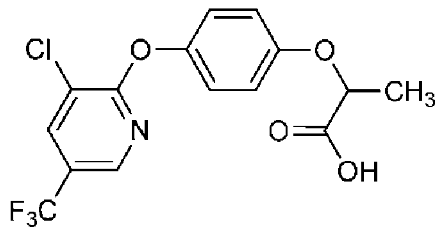

Formula II

Haloxyfop-P is an ester of aryloxyphenoxypropionic herbicides. Haloxyfop-P inhibits the biosynthesis of lipids through inhibition of ACCase enzymes. Haloxyfop-P can be provided in its acid form (as shown above) or as an agriculturally acceptable salt or ester thereof. Haloxyfop-P is a systemic herbicide, its residues "translocate", or travel throughout the plant, including within the edible parts. Haloxyfop-P-methyl which is a methyl ester of Haloxyfop-P which is having notable herbicidal activity. Exemplary uses of Haloxyfop-P-methyl ester include post-emergence control of annual and perennial grasses in sugar beet, fodder beet, oilseed rape, potatoes, leaf vegetables, onions, flax, sunflowers, soybeans, vines, strawberries, rice and other crops.

US Patent No. 7105470 discloses herbicidal compositions for tolerant or resistant soyabean crops for controlling harmful plants in soyabean crops by a process comprising treating area under cultivation through Glufosinate and large number of other herbicides in combination. However, there is no direct reference to the biological study or any data that can ascertain additive effect of the combination of the present invention on certain specific broadleaved weeds of resistant soyabean crops which are tolerant to Glufosinate.

A variety of herbicides combinations have been hitherto developed to offer wider range of weed control. However, there still remains a need for improved solutions and process of use thereof that are effective in controlling broadleaved weeds especially which are developing resistance towards Glufosinate. The present invention meets these and other need in the art.

## OBJECTIVES

An object of the present invention is to provide a process to control certain broadleaved weeds.

Another object of the present invention is to provide a process that effectively controls certain broadleaved weeds in both pre-emergent and post-emergent conditions.

Another object of the present invention is to provide a process that offers effective broadleaved weed control in arable as well as non-arable lands.

## SUMMARY OF THE INVENTION

The present invention provides a process of controlling certain broadleaved weeds, by applying an herbicidally effective amount of a combination comprising:

A) Glufosinate, ((RS)-2-Amino-4-(hydroxy(methyl)phosphonoyl) butanoic acid), its agriculturally acceptable salts, isomers or esters thereof; and

B) Haloxyfop ((RS)-2-{4-[3-chloro-5-(trifluoromethyl)-2- pyridyloxy] phenoxy} propionic acid), its agriculturally acceptable salts, isomers or esters thereof.

Further, there is provided a process of controlling certain broadleaved weeds by applying herbicidally effective amount of a combination of Glufosinate and Haloxyfop in broadleaved weeds wherein effective weed control could not be achieved by application of Glufosinate alone.

Further, there is provided a process of controlling certain broadleaved weeds comprising applying herbicidally effective amount of a combination of Glufosinate and Haloxyfop, wherein said broadleaved weed species are selected from the group of *Euphorbiaceae, Portulacaceae* and *Commelinaceae; preferably* from Euphorbia, Portulaca and Commelina genus respectively.

Further, there is provided a process of controlling certain broadleaved weeds by applying a composition comprising Glufosinate and Haloxyfop.

Further, there is provided a process of controlling certain broadleaved weeds comprising applying a composition comprising Glufosinate and Haloxyfop, wherein said broadleaved weed species are selected from the group of *Euphorbia hirta, Portulaca oleracea* and *Commelina bengalhensis.*

DESCRIPTION OF THE INVENTION

Definitions:

The following terms have the indicated meanings when used herein:
As used herein, a herbicidally effective amount is an amount of active ingredient which causes an adversely modifying effect in targeted weeds. Such effects include deviations from natural development, killing, regulation, desiccation, retardation, and the like.

As used herein, post-emergence control of weeds means preventing, reducing, killing, or otherwise adversely modifying the development of the weeds with negligent adverse effect on the crop plants.

As used herein, applying an herbicide or herbicidal composition means delivering it directly to the targeted weeds or to the locus thereof or to the area where control of targeted weed is desired, but not directly on the trees, vines and nuts. Sprays or granules are directed under the vines or perennial crops, with foliar exposure of the vines and perennial crops being avoided.

As used herein, agriculturally acceptable salts, isomers, esters and derivatives of the compound of formula (I) or the compound of formula (II) refer to salts, isomers, esters and derivatives and can be hydrolyzed, oxidized, metabolized, or otherwise converted in plants or solid to the corresponding metabolite which, depending upon the pH, may be in the dissociated or undissociated form.

As used herein, the terms _formulation: and _composition: may be used interchangeably and refer to a mixture of two or more compounds, elements, molecules, etc. In some aspects the terms _formulation: and _composition: may be used to refer to a mixture of one or more active ingredients with a carrier or other excipients.

As used herein, the term _expected value: refer to the statistically predicted value as percentage control of weeds receiving treatment according to the present invention.

It has now been found that, surprisingly, process of applying the combination of a glutamine-synthase herbicide, Glufosinate with ACCase inhibitor herbicide, Haloxyfop surpasses the additional effect to be expected in principle on the *Commelina benghalensis, Euphorbia hirta* and *Portulaca oleracea* broadleaved weeds, and thus offers a complete control. The combination of herbicidally effective amount of Glufosinate and Haloxyfop controls said broadleaved weeds that are failed to get controlled by the application of either of the compounds of said combination when used alone.

The present invention provides a process of controlling certain broadleaved weeds, by applying the herbicidally effective amount of a combination comprising:

A) A broad-spectrum herbicide Glufosinate, which is (RS)-2-Amino-4-(hydroxy(methyl)phosphonyl) butanoic acid, its agriculturally acceptable salts, isomers or esters thereof hereinafter, referred to as glufosinate; and
B) Haloxyfop ((RS)-2-{4-[3-chloro-5-(trifluoromethyl)-2-pyridyloxy] phenoxy} propionic acid) its agriculturally acceptable salts, isomers or esters thereof. (hereinafter, referred to as Haloxyfop).

According to another embodiment of the present invention, Glufosinate is applied alone or in combination at rates between 50g a.i./ha to about 2000g a.i./ha, preferably in the range of 20-1200g a.i./ha, more preferably in the range of 20-960g a.i./ha.

According to another embodiment of the present invention, Haloxyfop is applied alone or in combination at rates between 10g a.i./ha to about 300g a.i./ha, preferably in the range of 20-250g a.i./ha.

According to another embodiment of the present invention, the combination comprises from about 0.1% by weight to about 80% by weight of Glufosinate of the total amount of the active ingredients.

According to another embodiment of the present invention, the combination comprises from about 0.1% to about 70% by weight of Haloxyfop of the total amount of the active ingredients.

In another embodiment of the present invention, Glufosinate and Haloxyfop is used in a ratio from minimum of 9:1 to 1:9.

In an embodiment of the present invention, Glufosinate and Haloxyfop controls certain broadleaved weeds infestation at a locus by applying at said locus a herbicidally effective amount of Glufosinate and Haloxyfop.

In an embodiment of the present invention, herbicidally effective amount of Glufosinate and Haloxyfop controls certain broadleaved weeds when applied at the locus which is the vicinity of a desired plant/crop.

One of the preferred processes of control of certain broadleaved weeds according to the present invention involves the post-emergent control of weeds using herbicidally effective amount of Glufosinate and Haloxyfop.

In an embodiment of the present invention, herbicidally effective amount of Glufosinate and Haloxyfop in which Glufosinate is a broad spectrum, non-selective herbicide and Haloxyfop is used for selective control of certain weeds in arable and non-arable conditions.

In an embodiment of the present invention, the combination of Glufosinate and Haloxyfop in herbicidally effective amount exhibits good control of certain broad-leaved weeds as compared to the control exhibited by Glufosinate and Haloxyfop used alone.

In an embodiment of the present invention, the combination of Glufosinate and Haloxyfop can be applied sequentially, with either component being applied first. Preferably the components are applied within 3 days and most preferably same day of each other. Alternatively, and preferably, the Glufosinate and Haloxyfop are applied together as a single composition.

In an embodiment of the present invention, the combination employed in the practice of the present invention can be applied in a variety of ways known to those skilled in the art, at various concentrations. The combination is useful in controlling the growth of broadleaved weeds to the locus where control is desired.

In an embodiment of the invention, herbicidally effective amount of Glufosinate and Haloxyfop is effective in controlling broadleaved weeds from the Portulaca genus of family Portulacaceae.

In an embodiment of the invention, herbicidally effective amount of Glufosinate and Haloxyfop is effective in controlling broadleaved weeds selected from *Portulaca oleraceae* species.

In an embodiment of the invention, herbicidally effective amount of Glufosinate and Haloxyfop is effective in controlling broadleaved weeds from Commelina genus of Commelinaceae family.

In an embodiment of the invention, herbicidally effective amount of Glufosinate and Haloxyfop is effective in controlling broadleaved weeds selected from *commelina benghalensis* species.

In an embodiment of the invention, herbicidally effective amount of Glufosinate and Haloxyfop is effective in controlling broadleaved weeds selected from Euphorbia genus of Euphorbiaceae family.

In an embodiment of the invention, herbicidally effective amount of Glufosinate and Haloxyfop is effective in controlling broadleaved weeds selected from *euphorbia hirta* species.

In an embodiment, glufosinate is selected from its isomers, mixture of isomers, derivatives, or their lower alkyl esters thereof or salts thereof with acids or bases preferably the racemate or its salts as the active ingredient.

In another embodiment, the preferred salt is glufosinate ammonium.

In another embodiment, the preferred isomer is glufosinate P.

In an embodiment, haloxyfop is selected from its salts, its isomers, mixture of isomers, or the lower alkyl esters thereof.

In another embodiment, the preferred isomer is haloxyfop-P.

In yet another embodiment, the preferred ester is methyl ester of haloxyfop.

In a preferred embodiment, the isomer is haloxyfop-P-methyl.

In an embodiment of the present invention, there is provided a process of controlling certain broadleaved weeds by applying a composition comprising Glufosinate and Haloxyfop.

In another embodiment, there is provided a process of controlling certain broadleaved weeds by applying herbicidally effective amount of the compositions comprising glufosinate, its agriculturally acceptable salts, isomers or esters thereof and haloxyfop, its agriculturally acceptable salts, isomers or esters thereof and other suitable excipients wherein, said broadleaved weeds are selected from the family *Euphorbiaceae, Portulacaceae* and *Commelinaceae.*

According to another embodiment of the present invention, the composition comprises from about 1 g/L to about 800 g/L and preferably from about 10 g/L to about 500 g/L of Glufosinate of the total weight of the composition.

In a preferred embodiment of the present invention, the composition comprises from about 40 g/L to about 280 g/L of Glufosinate of the total weight of the composition.

In another preferred embodiment, glufosinate is applied at a rate of about 240g/ha to about 1500g/ha.

According to another embodiment of the present invention, the composition comprises from about 0.1 g/L to about 200 g/L and preferably from about 1 g/L to about 200 g/L of Haloxyfop of the total weight of the composition.

In a preferred embodiment of the present invention, the composition comprises from about 5 g/L to about 200 g/L of Haloxyfop of the total weight of the composition.

In another preferred embodiment, haloxyfop is applied at a rate of about 40g/ha to about 240g/ha.

In an embodiment of the present invention, the compositions and process of controlling certain broadleaved weeds herein are utilized to control certain broadleaved weeds that occur as undesirable vegetation includes, but is not limited to, those occurs in Glufosinate-tolerant soybeans, corn, or cotton; non-crop areas, including but not limited to pastures, grasslands, rangelands, fallowland, fencerows, parking areas, tank farms, storage areas, rights-of-way, utility areas, turf, forestry, aquatics, industrial vegetation management (IVM) and fallow-bed prior to planting crops; perennial crops where the application contacts the undesirable vegetation but does not contact the crop foliage, such as tree and vine orchards, including but not limited to citrus, grapes, almond, apple, apricot, avocado, beechnut, brazil nut, butternut, cashew, cherry, chestnut, chinquapin, crab apple, date, feijoa, fig, filbert, hickory nut, kiwi, lemon, lime, loquat, macadamia nut, mandarin, mayhaw, nectarine, olive, oranges, peach, pear, pecan, persimmon, pistachio, plum, pome fruit, pomegranate, prune, quince, stone fruit, tree nuts and walnut; fruiting crops (e.g., blueberries, guava, papaya, strawberries, taro, blackberries and raspberries); and plantation crops (including, but not limited to, coffee, cocoa, rubber and palm oil).

The compositions of the present invention can be in any conventional agriculturally useful form, for example, in the form of a twin pack, or in a ready-to-use formulation, or in the form of a tank mix. Additionally, the active compounds can be supplied (either separately or pre-mixed) in any appropriate formulation type, for example emulsion concentrate (EC), a suspension concentrate (sq, a suspoemulsion (SE), a capsule suspension (CS), a water dispersible granule (WG), an emulsifiable granule (EG), a water in oil emulsion (EO), an oil in water emulsion (EW), a micro-emulsion (ME), an oil dispersion (OD), an oil miscible flowable (OF), an oil miscible liquid (OL), a soluble concentrate (SL), an ultra-low volume suspension (SU), an ultra-low volume liquid (UL), a dispersible concentrate (DC), a wettable powder (WP) or any other technically feasible formulation in combination with agriculturally acceptable adjuvants.

In an embodiment of the invention, various adjuvants and carriers are added that facilitate dispersion of active substances in the formulation. The choice of formulation and mode of application for any given compound may affect its activity, and selection shall be made accordingly.

In an embodiment of the invention, various excipients are added that facilitate formulation of active substances in the desired form.

In another embodiment of the invention, these formulations can be applied to the areas where control is desired by conventional processes. Dust and liquid compositions, for example, can be applied by the use of power-dusters, broom and hand sprayers and spray dusters. The formulations can also be applied from airplanes as a dust or a spray or by rope wick applications. The formulations can also be applied by addition to irrigation water. This permits penetration of the formulations into the soil together with the irrigation water. Dust compositions, granular compositions or liquid formulations applied to the surface of the soil can be distributed below the surface of the soil by conventional means such as disking, dragging or mixing operations.

Further, other herbicidally active substances or compositions may be combined with the herbicidal composition of this invention. For example, the compositions may contain, in addition to Glufosinate and Haloxyfop, insecticides, fungicides, bactericides, acaracides or nematicides, in order to broaden the spectrum of activity.

In another embodiment, the composition comprising Glufosinate and Haloxyfop may further contain herbicide selected from ametryn, atrazine, simazine, alachlor, metolachlor, S-metolachlor, asulam, metribuzin, trifluralin, pendimethalin, tebuthiuron, diuron, hexazinone, amicarbazone, imazapic, trifloxysulfuron-sodium, iodosulfuron-methyl-sodium, halosulfuron-methyl, ethoxysulfuron, carfentrazoneethyl, isoxaflutole, bicyclopyrone, mesotrione, picloram and salts and esters thereof, 2,4-D and salts thereof and esters thereof, dicamba and salts and esters thereof, clomazone, MSMA, paraquat or diquat.

In another embodiment, the composition comprising Glufosinate and Haloxyfop may further contain fungicide selected from kresoxim-methyl, azoxystrobin, trifloxystrobin, fluoxastrobin, picoxystrobin, pyraclostrobin, dimoxystrobin, pyribencarb, metominostrobin, orysastrobin, enestrobin, pyraoxystrobin, pyrametostrobin, azaconazole, bitertanol, bromuconazole, cyproconazole, difenoconazole, diniconazole, epoxiconazole, fenbuconazole, fluquinoconazole, flusilazole, flutriafol, hexaconazole, imibenconazole, ipconazole, metconazole, myclobutanil, penconazole, propiconazole, prothioconazole, simeconazole, tebuconazole, tetraconazole, triadimenol, triticonazole, fenarimol, nuarimol, pyrifenox, imazalil, oxpoconazole fumarate, pefurazoate, prochloraz, triflumizoie, metalaxyl, and metalaxyl-M.

Rates of application of the composition, ortank-mixed separately formulated active ingredients, will vary according to prevailing conditions such as targeted weeds, degree of infestation, weather conditions, soil conditions, crop species, mode of application, and application time. As one skilled in the art is aware, in herbicidal testing, a significant number of factors that are not readily controllable can affect the results of individual tests and render them non-reproducible. For example, the results may vary depending on environmental factors, such as amount of sunlight and water, soil type, pH of the soil, temperature, and humidity, among otherfactors. Also, the depth of planting, the application rate of individual and combined herbicides, the application rate of any antidote, and the ratio of the individual herbicides to one another and/or to an antidote, as well as the nature of crops or weeds being tested, can affect the results of the test. Results may vary from crop to crop within the crop varieties.

Inventors of the present invention succeeded in controlling certain broadleaved weeds selected from portulaca spp, commelina spp and euphorbia spp by applying herbicidally effective amount of combination of Glufosinate and

Haloxyfop. The process of controlling certain broadleaved weeds is ascertained by the experiments as exemplified below. These examples are merely illustrations and are not to be understood as limiting the scope and underlying principles of the invention in any way. Indeed, various modifications of the invention in addition to those shown and described herein will become apparent to those skilled in the art from the following examples and foregoing description.

POST EMERGENCE FIELD TRIAL TO OBSERVE EFFECTIVENESS OF COMBINATION ON SELECTED WEEDS

SEASON-1

Post emergence field trials were conducted to observe effectiveness of the combination on commelina benghalensis, euphorbia hirta and portulaca oleracea. Field trials were conducted to observe effectiveness of Glufosinate and Haloxyfop-p-methyl combination in comparison to glufosinate or Haloxyfop-p-methyl alone. The study was conducted in two seasons to observe the variation. These three studies are presented below as:

¿ Season-I, 7DAT and 14DAT study of Haloxyfop-P-methyl, Glufosinate and Haloxyfop-P-methyl+Glufosinate combination on Commelina benghalensis, Euphorbia hirta Portulaca Oleracea
¿ Season-2, 7DAT and 14DAT study of Haloxyfop-P-methyl, Glufosinate and Haloxyfop-P-methyl+Glufosinate combination on Commelina benghalensis, Euphorbia hirta Portulaca Oleracea

EXAMPLE 1

Season-I, 7DAT and 14DAT study of Haloxyfop-P-methyl, Glufosinate and Haloxyfop-P-methyl+Glufosinate combination on Commelina benghalensis, Euphorbia hirta Portulaca Oleracea.
Details of experiment:

a) Treatments: 15 (Fifteen)
b) Plot size: 100 sqm (2.74 X 36.49)
c) Test Crop: Grape Orchard
d) Variety: Thompson Seedless
e) Time of application: Post-emergence directed spray
f) Application volume: 500 L/Ha
g) Observation days: 7, 14 days after application
h) Season/Month: Rainy/August, 2015
i) Treatment details: This study was performed on grapes orchard where grapes orchard was predominantly covered by weed plants such as *euphorbia hirta, commelina benghalensis and portulaca oleracea.* The average height of weeds was about 2-inch to 4-inch. For the study purpose, grape orchard was demarcated into three distinct regions. Each region was further divided into three zones such that observations were evaluated in the form of 3x3 matrix design. The intention of considering weed flora in three distinct regions was to evaluate individual herbicidal activity of Haloxyfop-P-methyl (control-I), individual herbicidal activity of Glufosinate (control-II) and the herbicidal activity of Haloxyfop-P-methyl and Glufosinate in combination. Also, the study was further intended to evaluate the efficiency of optimum dose of herbicidally active ingredients.

Effects of the combinations according to the invention are observed which exceed the formal total of the effects when applying the herbicides individually. If the data of the effects observed already exceed the formal total of the data of the experiments with individual applications, then they also exceed Colby's expected value (= $E^C$), which is calculated by the formula:

$$E^C = A + B - (A.B/100)$$

A = % visual control by compound (a) of at the rate of application of p kg/ha;

B = % visual control by compound (b) at the rate of application of q kg/ha; and

$E^C$ = Expected % visual control caused by compounds (a) and (b) at a rate of application of p and q kg/ha

At suitable low dosages, the observed data of the experiments show an effect of the combinations above Colby's expected values.

Accordingly, weed plants were evaluated in one-week interval starting at 7 days after treatment (Table 1 to Table 9).The final evaluation is done two weeks (14 DAT) after treatment (Table 10 to Table 15), at which time-point, significant burn down effect was observed in the first region treated with the combination of Glufosinate and Haloxyfop-P-methyl in comparison to the second and third region treated with control-I and control-II respectively.

The region that received control-I spray did not show any significant herbicidal activity. All the three weeds i.e. *euphorbia hirta, commelina benghalensis* and *portulaca oleracea* did not respond to control-I even at varied concentrations e.g. 140 g/ha, 200 g/ha and 260 g/ha of Haloxyfop.

Similarly, another region received control-II spray with 560 g/ha, 835 g/ha and 1200 g/ha doses of Glufosinate. Control-II showed little better herbicidal activity on targeted weeds wherein average 55% of euphorbia hirta, 65% of commelina benghalensis and 34% of portulaca oleracea got killed by control-II spray.

The region that received combination of Glufosinate and Haloxyfop-P-methyl showed significantly more burn down effect at all the varied concentrations with combinations of 140+560 g/ha, 140+835 g/ha, 140+1200 g/ha, 200+ 560 g/ha, 200+ 835 g/ha, 200+1200 g/ha, 260+560 g/ha, 260+835 g/ha, 260+1200 g/ha in all the selected weed classes.

Therefore, it was concluded that the combination of Glufosinate and Haloxyfop-P-methyl showed far more superior effect on *Euphorbia hirta, Commelina benghalensis* and *Portulaca oleracea* weeds than when treated alone with either of the two herbicides.

Table 1

| DAT | 7 | |
|---|---|---|
| Weed | *Commelina benghalensis* | |
| Doses | Expected ($E^C$) | Observed |
| Haloxyfop-P-methyl @ 140 g ai/ha | | 0.00 |
| Glufosinate @ 560 g ai/ha | | 40.00 |
| Glufosinate @ 835 g ai/ha | | 60.00 |
| Glufosinate @ 1200 g ai/ha | | 65.00 |
| Haloxyfop-P-methyl @ 140 g ai/ha + Glufosinate @ 560 g ai/ha | 40.00 | 45.00 |
| Haloxyfop-P-methyl @ 140 g ai/ha + Glufosinate @ 835 g ai/ha | 60.00 | 62.00 |
| Haloxyfop-P-methyl @ 140 g ai/ha + Glufosinate @ 1200 g ai/ha | 65.00 | 70.00 |

Table 2

| DAT | 7 | |
|---|---|---|
| Weed | *Euphorbia hirta* | |
| Doses | Expected ($E^C$) | Observed |
| Haloxyfop-P-methyl @ 140 g ai/ha | | 0.00 |
| Glufosinate @ 560 g ai/ha | | 55.00 |
| Glufosinate @ 835 g ai/ha | | 65.00 |
| Glufosinate @ 1200 g ai/ha | | 75.00 |
| Haloxyfop-P-methyl @ 140 g ai/ha + Glufosinate @ 560 g ai/ha | 55.00 | 59.00 |
| Haloxyfop-P-methyl @ 140 g ai/ha + Glufosinate @ 835 g ai/ha | 65.00 | 72.00 |
| Haloxyfop-P-methyl @ 140 g ai/ha + Glufosinate @ 1200 g ai/ha | 75.00 | 81.00 |

Table 3

| DAT | 7 | |
|---|---|---|
| Weed | *Portulaca oleracea* | |
| Doses | Expected ($E^C$) | Observed |
| Haloxyfop-P-methyl @ 140 g ai/ha | | 0.00 |
| Glufosinate @ 560 g ai/ha | | 25.00 |
| Glufosinate @ 835 g ai/ha | | 35.00 |
| Glufosinate @ 1200 g ai/ha | | 42.00 |
| Haloxyfop-P-methyl @ 140 g ai/ha + Glufosinate @ 560 g ai/ha | 25.00 | 27.00 |
| Haloxyfop-P-methyl @ 140 g ai/ha + Glufosinate @ 835 g ai/ha | 35.00 | 45.00 |
| Haloxyfop-P-methyl @ 140 g ai/ha + Glufosinate @ 1200 g ai/ha | 42.00 | 52.00 |

Table 4

| DAT | 7 | |
|---|---|---|
| Weed | *Commelina benghalensis* | |
| Doses | Expected ($E^C$) | Observed |
| Haloxyfop-P-methyl @ 200 g ai/ha | | 2.00 |
| Glufosinate @ 560 g ai/ha | | 40.00 |
| Glufosinate @ 835 g ai/ha | | 60.00 |
| Glufosinate @ 1200 g ai/ha | | 65.00 |
| Haloxyfop-P-methyl @ 200 g ai/ha + Glufosinate @ 560 g ai/ha | 41.00 | 47.00 |
| Haloxyfop-P-methyl @ 200 g ai/ha + Glufosinate @ 835 g ai/ha | 61.00 | 71.00 |
| Haloxyfop-P-methyl @ 200 g ai/ha + Glufosinate @ 1200 g ai/ha | 66.00 | 78.00 |

Table 5

| DAT | 7 | |
|---|---|---|
| Weed | *Euphorbia hirta* | |
| Doses | Expected ($E^C$) | Observed |
| Haloxyfop-P-methyl @ 200 g ai/ha | | 0.00 |
| Glufosinate @ 560 g ai/ha | | 55.00 |
| Glufosinate @ 835 g ai/ha | | 65.00 |
| Glufosinate @ 1200 g ai/ha | | 75.00 |
| Haloxyfop-P-methyl @ 200 g ai/ha + Glufosinate @ 560 g ai/ha | 55.00 | 63.00 |
| Haloxyfop-P-methyl @ 200 g ai/ha + Glufosinate @ 835 g ai/ha | 65.00 | 78.00 |
| Haloxyfop-P-methyl @ 200 g ai/ha + Glufosinate @ 1200 g ai/ha | 75.00 | 86.00 |

Table 6

| DAT | 7 | |
|---|---|---|
| Weed | *Portulaca oleracea* | |
| Doses | Expected ($E^C$) | Observed |
| Haloxyfop-P-methyl @ 200 g ai/ha | | 0.00 |
| Glufosinate @ 560 g ai/ha | | 25.00 |
| Glufosinate @ 835 g ai/ha | | 35.00 |
| Glufosinate @ 1200 g ai/ha | | 42.00 |
| Haloxyfop-P-methyl @ 200 g ai/ha + Glufosinate @ 560 g ai/ha | 25.00 | 30.00 |
| Haloxyfop-P-methyl @ 200 g ai/ha + Glufosinate @ 835 g ai/ha | 35.00 | 36.00 |
| Haloxyfop-P-methyl @ 200 g ai/ha + Glufosinate @ 1200 g ai/ha | 42.00 | 45.00 |

Table 7

| DAT | 7 | |
|---|---|---|
| Weed | *Commelina benghalensis* | |
| Doses | Expected ($E^C$) | Observed |
| Haloxyfop-P-methyl @ 260 g ai/ha | | 5.00 |
| Glufosinate @ 560 g ai/ha | | 40.00 |
| Glufosinate @ 835 g ai/ha | | 60.00 |
| Glufosinate @ 1200 g ai/ha | | 65.00 |
| Haloxyfop-P-methyl @ 260 g ai/ha + Glufosinate @ 560 g ai/ha | 43.00 | 48.00 |
| Haloxyfop-P-methyl @ 260 g ai/ha + Glufosinate @ 835 g ai/ha | 62.00 | 69.00 |
| Haloxyfop-P-methyl @ 260 g ai/ha + Glufosinate @ 1200 g ai/ha | 67.00 | 81.00 |

Table 8

| DAT | 7 | |
|---|---|---|
| Weed | *Euphorbia hirta* | |
| Doses | Expected ($E^C$) | Observed |
| Haloxyfop-P-methyl @ 260 g ai/ha | | 2.00 |
| Glufosinate @ 560 g ai/ha | | 55.00 |
| Glufosinate @ 835 g ai/ha | | 65.00 |
| Glufosinate @ 1200 g ai/ha | | 75.00 |
| Haloxyfop-P-methyl @ 260 g ai/ha + Glufosinate @ 560 g ai/ha | 56.00 | 67.00 |
| Haloxyfop-P-methyl @ 260 g ai/ha + Glufosinate @ 835 g ai/ha | 66.00 | 79.00 |
| Haloxyfop-P-methyl @ 260 g ai/ha + Glufosinate @ 1200 g ai/ha | 76.00 | 85.00 |

Table 9

| DAT | 7 | |
|---|---|---|
| Weed | *Portulaca oleracea* | |
| Doses | Expected ($E^C$) | Observed |
| Haloxyfop-P-methyl @ 260 g ai/ha | | 0.00 |
| Glufosinate @ 560 g ai/ha | | 25.00 |
| Glufosinate @ 835 g ai/ha | | 35.00 |
| Glufosinate @ 1200 g ai/ha | | 42.00 |
| Haloxyfop-P-methyl @ 260 g ai/ha + Glufosinate @ 560 g ai/ha | 25.00 | 40.00 |
| Haloxyfop-P-methyl @ 260 g ai/ha + Glufosinate @ 835 g ai/ha | 35.00 | 43.00 |
| Haloxyfop-P-methyl @ 260 g ai/ha + Glufosinate @ 1200 g ai/ha | 42.00 | 49.00 |

Table 10

| DAT | 14 | |
|---|---|---|
| Weed | *Euphorbia hirta* | |
| Doses | Expected ($E^C$) | Observed |
| Haloxyfop-P-methyl @ 140 g ai/ha | | 0.00 |
| Glufosinate @ 560 g ai/ha | | 65.00 |
| Glufosinate @ 835 g ai/ha | | 70.00 |
| Glufosinate @ 1200 g ai/ha | | 78.00 |
| Haloxyfop-P-methyl @ 140 g ai/ha + Glufosinate @ 560 g ai/ha | 65.00 | 72.00 |
| Haloxyfop-P-methyl @ 140 g ai/ha + Glufosinate @ 835 g ai/ha | 70.00 | 75.00 |
| Haloxyfop-P-methyl @ 140 g ai/ha + Glufosinate @ 1200 g ai/ha | 78.00 | 85.00 |

Table 11

| DAT | 14 | |
|---|---|---|
| Weed | *Portulaca oleracea* | |
| Doses | Expected ($E^C$) | Observed |
| Haloxyfop-P-methyl @ 140 g ai/ha | | 5.00 |
| Glufosinate @ 560 g ai/ha | | 67.00 |
| Glufosinate @ 835 g ai/ha | | 70.00 |
| Glufosinate @ 1200 g ai/ha | | 78.00 |
| Haloxyfop-P-methyl @ 140 g ai/ha + Glufosinate @ 560 g ai/ha | 69.00 | 70.00 |
| Haloxyfop-P-methyl @ 140 g ai/ha + Glufosinate @ 835 g ai/ha | 72.00 | 78.00 |
| Haloxyfop-P-methyl @ 140 g ai/ha + Glufosinate @ 1200 g ai/ha | 79.00 | 85.00 |

Table 12

| DAT | 14 | |
|---|---|---|
| Weed | *Euphorbia hirta* | |
| Doses | Expected ($E^C$) | Observed |
| Haloxyfop-P-methyl @ 200 g ai/ha | | 3.00 |
| Glufosinate @ 560 g ai/ha | | 65.00 |
| Glufosinate @ 835 g ai/ha | | 70.00 |
| Glufosinate @ 1200 g ai/ha | | 78.00 |
| Haloxyfop-P-methyl @ 200 g ai/ha + Glufosinate @ 560 g ai/ha | 66.00 | 78.00 |
| Haloxyfop-P-methyl @ 200 g ai/ha + Glufosinate @ 835 g ai/ha | 71.00 | 82.00 |
| Haloxyfop-P-methyl @ 200 g ai/ha + Glufosinate @ 1200 g ai/ha | 79.00 | 88.00 |

Table 13

| DAT | 14 | |
|---|---|---|
| Weed | *Portulaca oleracea* | |
| Doses | Expected ($E^C$) | Observed |
| Haloxyfop-P-methyl @ 200 g ai/ha | | 10.00 |
| Glufosinate @ 560 g ai/ha | | 67.00 |
| Glufosinate @ 835 g ai/ha | | 70.00 |
| Glufosinate @ 1200 g ai/ha | | 78.00 |
| Haloxyfop-P-methyl @ 200 g ai/ha + Glufosinate @ 560 g ai/ha | 70.00 | 75.00 |
| Haloxyfop-P-methyl @ 200 g ai/ha + Glufosinate @ 835 g ai/ha | 73.00 | 80.00 |
| Haloxyfop-P-methyl @ 200 g ai/ha + Glufosinate @ 1200 g ai/ha | 80.00 | 83.00 |

Table 14

| DAT | 14 | |
|---|---|---|
| Weed | *Euphorbia hirta* | |
| Doses | Expected ($E^C$) | Observed |
| Haloxyfop-P-methyl @ 260 g ai/ha | | 5.00 |
| Glufosinate @ 560 g ai/ha | | 65.00 |
| Glufosinate @ 835 g ai/ha | | 70.00 |
| Glufosinate @ 1200 g ai/ha | | 78.00 |
| Haloxyfop-P-methyl @ 260 g ai/ha + Glufosinate @ 560 g ai/ha | 67.00 | 75.00 |
| Haloxyfop-P-methyl @ 260 g ai/ha + Glufosinate @ 835 g ai/ha | 72.00 | 85.00 |
| Haloxyfop-P-methyl @ 260 g ai/ha + Glufosinate @ 1200 g ai/ha | 79.00 | 90.00 |

Table 15

| DAT | 14 | |
|---|---|---|
| Weed | *Portulaca oleracea* | |
| Doses | Expected ($E^C$) | Observed |
| Haloxyfop-P-methyl @ 260 g ai/ha | | 12.00 |
| Glufosinate @ 560 g ai/ha | | 67.00 |
| Glufosinate @ 835 g ai/ha | | 70.00 |
| Glufosinate @ 1200 g ai/ha | | 78.00 |
| Haloxyfop-P-methyl @ 260 g ai/ha + Glufosinate @ 560 g ai/ha | 71.00 | 77.00 |
| Haloxyfop-P-methyl @ 260 g ai/ha + Glufosinate @ 835 g ai/ha | 74.00 | 80.00 |
| Haloxyfop-P-methyl @ 260 g ai/ha + Glufosinate @ 1200 g ai/ha | 81.00 | 89.00 |

EXAMPLE 2

Season-2, 7DAT and 14DAT study of Haloxyfop-P-methyl, Glufosinate and Haloxyfop-P-methyl+Glufosinate combination on Commelina benghalensis, Euphorbia hirta Portulaca Oleracea

Details of experiment:

a) Treatments: 15 (Fifteen)

b) Plot size: 50 sqm

c) Sprayer used: Battery operated Knapsack Sprayer

d) Nozzle Type: Flat Fan

e) Test Crop: Grape Orchard

f) Variety: Thompson Seedless

g) Time of application: Post-emergence directed spray

h) Application volume: 500 L/Ha

i) Observation days: 7, 14 days after application

j) Season/Month: Winter/February, 2017

Treatment details: This study was performed on grapes orchard where grapes orchard was predominantly covered by weed plants such as *euphorbia hirta, commelina benghalensis and portulaca oleracea.* The average height of weeds was about 4-inch to 10-inch. For the study purpose, grape orchard was demarcated into three distinct regions. Each region was further divided into three zones such that observations were evaluated in the form of 3x3 matrix design. The intention of considering weed flora in three distinct regions was to evaluate individual herbicidal activity of Haloxyfop-P-methyl (control-I), individual herbicidal activity of Glufosinate (control-II) and the herbicidal activity of Haloxyfop-P-methyl and Glufosinate in combination. Also, the study was further intended to evaluate the efficiency of optimum dose of herbicidally active ingredients.

Weed plants were evaluated in one-week interval starting at 7 days after treatment (Table 18 to Table 24). The final evaluation is done two weeks (14 DAT) after treatment (Table 25 to Table 33), at which time-point, significant burn down effect was observed in the first region treated with the combination of Glufosinate and Haloxyfop-P-methyl in comparison to the second and third region treated with control-I and control-II respectively.

The region that received control-I spray did not show any significant herbicidal activity. All the three weeds i.e. *euphorbia hirta, commelina benghalensis* and *portulaca oleracea* showed very diminished response to control-I even at varied concentrations e.g. 140 g/ha, 200 g/ha and 260 g/ha of Haloxyfop.

Similarly, another region received control-II spray with 560 g/ha, 835 g/ha and 1200 g/ha doses of Glufosinate. Control-II showed little better herbicidal activity on targeted weeds wherein average 43% of euphorbia hirta, 32% of commelina benghalensis and 22% of *portulaca oleracea* got killed by control-II spray.

The region that received combination of Glufosinate and Haloxyfop-P-methyl showed significantly more burn down effect at all the varied concentrations with combinations of 140+560 g/ha, 140+835 g/ha, 140+1200 g/ha, 200+ 560 g/ha, 200+ 835 g/ha, 200+1200 g/ha, 260+560 g/ha, 260+835 g/ha, 260+1200 g/ha in all the selected weeds

Table 16

| DAT | 7 | |
|---|---|---|
| Weed | *Commelina benghalensis* | |
| Doses | Expected ($E^C$) | Observed |
| Haloxyfop-P-methyl @ 140 g ai/ha | | 1.67 |
| Glufosinate @ 560 g ai/ha | | 26.67 |
| Glufosinate @ 835 g ai/ha | | 31.67 |
| Glufosinate @ 1200 g ai/ha | | 36.67 |
| Haloxyfop-P-methyl @ 140 g ai/ha + Glufosinate @ 560 g ai/ha | 27.89 | 48.33 |
| Haloxyfop-P-methyl @ 140 g ai/ha + Glufosinate @ 835 g ai/ha | 32.81 | 46.67 |
| Haloxyfop-P-methyl @ 140 g ai/ha + Glufosinate @ 1200 g ai/ha | 37.72 | 60.00 |

Table 17

| DAT | 7 | |
|---|---|---|
| Weed | *Euphorbia hirta* | |
| Doses | Expected ($E^C$) | Observed |
| Haloxyfop-P-methyl @ 140 g ai/ha | | 1.67 |
| Glufosinate @ 560 g ai/ha | | 35.00 |
| Glufosinate @ 835 g ai/ha | | 43.33 |
| Glufosinate @ 1200 g ai/ha | | 51.67 |
| Haloxyfop-P-methyl @ 140 g ai/ha + Glufosinate @ 560 g ai/ha | 36.08 | 43.33 |
| Haloxyfop-P-methyl @ 140 g ai/ha + Glufosinate @ 835 g ai/ha | 44.28 | 50.00 |
| Haloxyfop-P-methyl @ 140 g ai/ha + Glufosinate @ 1200 g ai/ha | 52.47 | 61.67 |

Table 18

| DAT | 7 | |
|---|---|---|
| Weed | *Portulaca oleracea* | |
| Doses | Expected ($E^C$) | Observed |
| Haloxyfop-P-methyl @ 140 g ai/ha | | 0.00 |
| Glufosinate @ 560 g ai/ha | | 16.67 |
| Glufosinate @ 835 g ai/ha | | 20.00 |
| Glufosinate @ 1200 g ai/ha | | 28.33 |
| Haloxyfop-P-methyl @ 140 g ai/ha + Glufosinate @ 560 g ai/ha | 16.67 | 23.33 |
| Haloxyfop-P-methyl @ 140 g ai/ha + Glufosinate @ 835 g ai/ha | 20.00 | 26.67 |

(continued)

| DAT | 7 | |
|---|---|---|
| Weed | *Portulaca oleracea* | |
| Doses | Expected ($E^C$) | Observed |
| Haloxyfop-P-methyl @ 140 g ai/ha + Glufosinate @ 1200 g ai/ha | 28.33 | 35.00 |

Table 19

| DAT | 7 | |
|---|---|---|
| Weed | *Commelina benghalensis* | |
| Doses | Expected ($E^C$) | Observed |
| Haloxyfop-P-methyl @ 200 g ai/ha | | 6.67 |
| Glufosinate @ 560 g ai/ha | | 26.67 |
| Glufosinate @ 835 g ai/ha | | 31.67 |
| Glufosinate @ 1200 g ai/ha | | 36.67 |
| Haloxyfop-P-methyl @ 200 g ai/ha + Glufosinate @ 560 g ai/ha | 31.56 | 40.00 |
| Haloxyfop-P-methyl @ 200 g ai/ha + Glufosinate @ 835 g ai/ha | 36.22 | 45.00 |
| Haloxyfop-P-methyl @ 200 g ai/ha + Glufosinate @ 1200 g ai/ha | 40.89 | 50.00 |

Table 20

| DAT | 7 | |
|---|---|---|
| Weed | *Euphorbia hirta* | |
| Doses | Expected ($E^C$) | Observed |
| Haloxyfop-P-methyl @ 200 g ai/ha | | 5.00 |
| Glufosinate @ 560 g ai/ha | | 35.00 |
| Glufosinate @ 835 g ai/ha | | 43.33 |
| Glufosinate @ 1200 g ai/ha | | 51.67 |
| Haloxyfop-P-methyl @ 200 g ai/ha + Glufosinate @ 560 g ai/ha | 38.25 | 48.33 |
| Haloxyfop-P-methyl @ 200 g ai/ha + Glufosinate @ 835 g ai/ha | 46.17 | 48.33 |
| Haloxyfop-P-methyl @ 200 g ai/ha + Glufosinate @ 1200 g ai/ha | 54.08 | 56.67 |

Table 21

| DAT | 7 | |
|---|---|---|
| Weed | *Portulaca oleracea* | |
| Doses | Expected ($E^C$) | Observed |
| Haloxyfop-P-methyl @ 200 g ai/ha | | 0.00 |
| Glufosinate @ 560 g ai/ha | | 16.67 |
| Glufosinate @ 835 g ai/ha | | 20.00 |
| Glufosinate @ 1200 g ai/ha | | 28.33 |
| Haloxyfop-P-methyl @ 200 g ai/ha + Glufosinate @ 560 g ai/ha | 16.67 | 21.67 |

(continued)

| DAT | 7 | |
|---|---|---|
| Weed | *Portulaca oleracea* | |
| Doses | Expected ($E^C$) | Observed |
| Haloxyfop-P-methyl @ 200 g ai/ha + Glufosinate @ 835 g ai/ha | 20.00 | 31.67 |
| Haloxyfop-P-methyl @ 200 g ai/ha + Glufosinate @ 1200 g ai/ha | 28.33 | 38.33 |

Table 22

| DAT | 7 | |
|---|---|---|
| Weed | *Commelina benghalensis* | |
| Doses | Expected ($E^C$) | Observed |
| Haloxyfop-P-methyl @ 260 g ai/ha | | 10.00 |
| Glufosinate @ 560 g ai/ha | | 26.67 |
| Glufosinate @ 835 g ai/ha | | 31.67 |
| Glufosinate @ 1200 g ai/ha | | 36.67 |
| Haloxyfop-P-methyl @ 260 g ai/ha + Glufosinate @ 560 g ai/ha | 34.00 | 45.00 |
| Haloxyfop-P-methyl @ 260 g ai/ha + Glufosinate @ 835 g ai/ha | 38.50 | 46.67 |
| Haloxyfop-P-methyl @ 260 g ai/ha + Glufosinate @ 1200 g ai/ha | 43.00 | 60.00 |

Table 23

| DAT | 7 | |
|---|---|---|
| Weed | *Euphorbia hirta* | |
| Doses | Expected ($E^C$) | Observed |
| Haloxyfop-P-methyl @ 260 g ai/ha | | 6.67 |
| Glufosinate @ 560 g ai/ha | | 35.00 |
| Glufosinate @ 835 g ai/ha | | 43.33 |
| Glufosinate @ 1200 g ai/ha | | 51.67 |
| Haloxyfop-P-methyl @ 260 g ai/ha + Glufosinate @ 560 g ai/ha | 39.33 | 46.67 |
| Haloxyfop-P-methyl @ 260 g ai/ha + Glufosinate @ 835 g ai/ha | 47.11 | 53.33 |
| Haloxyfop-P-methyl @ 260 g ai/ha + Glufosinate @ 1200 g ai/ha | 54.89 | 66.67 |

Table 24

| DAT | 7 | |
|---|---|---|
| Weed | *Portulaca oleracea* | |
| Doses | Expected ($E^C$) | Observed |
| Haloxyfop-P-methyl @ 260 g ai/ha | | 1.67 |
| Glufosinate @ 560 g ai/ha | | 16.67 |
| Glufosinate @ 835 g ai/ha | | 20.00 |
| Glufosinate @ 1200 g ai/ha | | 28.33 |

(continued)

| DAT | 7 | |
|---|---|---|
| Weed | *Portulaca oleracea* | |
| Doses | Expected ($E^C$) | Observed |
| Haloxyfop-P-methyl @ 260 g ai/ha + Glufosinate @ 560 g ai/ha | 18.06 | 25.00 |
| Haloxyfop-P-methyl @ 260 g ai/ha + Glufosinate @ 835 g ai/ha | 21.33 | 23.33 |
| Haloxyfop-P-methyl @ 260 g ai/ha + Glufosinate @ 1200 g ai/ha | 29.53 | 40.00 |

Table 25

| DAT | 14 | |
|---|---|---|
| Weed | *Commelina benghalensis* | |
| Doses | Expected ($E^C$) | Observed |
| Haloxyfop-P-methyl @ 140 g ai/ha | | 8.33 |
| Glufosinate @ 560 g ai/ha | | 53.33 |
| Glufosinate @ 835 g ai/ha | | 58.33 |
| Glufosinate @ 1200 g ai/ha | | 71.67 |
| Haloxyfop-P-methyl @ 140 g ai/ha + Glufosinate @ 560 g ai/ha | 57.22 | 66.67 |
| Haloxyfop-P-methyl @ 140 g ai/ha + Glufosinate @ 835 g ai/ha | 61.81 | 70.00 |
| Haloxyfop-P-methyl @ 140 g ai/ha + Glufosinate @ 1200 g ai/ha | 74.03 | 78.33 |

Table 26

| DAT | 14 | |
|---|---|---|
| Weed | *Euphorbia hirta* | |
| Doses | Expected ($E^C$) | Observed |
| Haloxyfop-P-methyl @ 140 g ai/ha | | 6.67 |
| Glufosinate @ 560 g ai/ha | | 60.00 |
| Glufosinate @ 835 g ai/ha | | 68.33 |
| Glufosinate @ 1200 g ai/ha | | 75.00 |
| Haloxyfop-P-methyl @ 140 g ai/ha + Glufosinate @ 560 g ai/ha | 62.67 | 66.67 |
| Haloxyfop-P-methyl @ 140 g ai/ha + Glufosinate @ 835 g ai/ha | 70.44 | 73.33 |
| Haloxyfop-P-methyl @ 140 g ai/ha + Glufosinate @ 1200 g ai/ha | 76.67 | 85.00 |

Table 27

| DAT | 14 | |
|---|---|---|
| Weed | *Portulaca oleracea* | |
| Doses | Expected ($E^C$) | Observed |
| Haloxyfop-P-methyl @ 140 g ai/ha | | 1.67 |
| Glufosinate @ 560 g ai/ha | | 60.00 |
| Glufosinate @ 835 g ai/ha | | 60.00 |

(continued)

| DAT | 14 | |
|---|---|---|
| Weed | *Portulaca oleracea* | |
| Doses | Expected ($E^C$) | Observed |
| Glufosinate @ 1200 g ai/ha | | 71.67 |
| Haloxyfop-P-methyl @ 140 g ai/ha + Glufosinate @ 560 g ai/ha | 60.67 | 65.00 |
| Haloxyfop-P-methyl @ 140 g ai/ha + Glufosinate @ 835 g ai/ha | 60.67 | 68.33 |
| Haloxyfop-P-methyl @ 140 g ai/ha + Glufosinate @ 1200 g ai/ha | 72.14 | 73.33 |

Table 28

| DAT | 14 | |
|---|---|---|
| Weed | *Commelina benghalensis* | |
| Doses | Expected ($E^C$) | Observed |
| Haloxyfop-P-methyl @ 200 g ai/ha | | 10.00 |
| Glufosinate @ 560 g ai/ha | | 53.33 |
| Glufosinate @ 835 g ai/ha | | 58.33 |
| Glufosinate @ 1200 g ai/ha | | 71.67 |
| Haloxyfop-P-methyl @ 200 g ai/ha + Glufosinate @ 560 g ai/ha | 58.00 | 61.67 |
| Haloxyfop-P-methyl @ 200 g ai/ha + Glufosinate @ 835 g ai/ha | 62.50 | 66.67 |
| Haloxyfop-P-methyl @ 200 g ai/ha + Glufosinate @ 1200 g ai/ha | 74.50 | 80.00 |

Table 29

| DAT | 14 | |
|---|---|---|
| Weed | *Euphorbia hirta* | |
| Doses | Expected ($E^C$) | Observed |
| Haloxyfop-P-methyl @ 200 g ai/ha | | 10.00 |
| Glufosinate @ 560 g ai/ha | | 60.00 |
| Glufosinate @ 835 g ai/ha | | 68.33 |
| Glufosinate @ 1200 g ai/ha | | 75.00 |
| Haloxyfop-P-methyl @ 200 g ai/ha + Glufosinate @ 560 g ai/ha | 64.00 | 75.00 |
| Haloxyfop-P-methyl @ 200 g ai/ha + Glufosinate @ 835 g ai/ha | 71.50 | 83.33 |
| Haloxyfop-P-methyl @ 200 g ai/ha + Glufosinate @ 1200 g ai/ha | 77.50 | 86.67 |

Table 30

| DAT | 14 | |
|---|---|---|
| Weed | *Portulaca oleracea* | |
| Doses | Expected ($E^C$) | Observed |
| Haloxyfop-P-methyl @ 200 g ai/ha | | 1.67 |
| Glufosinate @ 560 g ai/ha | | 60.00 |

(continued)

| DAT | 14 | |
|---|---|---|
| Weed | *Portulaca oleracea* | |
| Doses | Expected ($E^C$) | Observed |
| Glufosinate @ 835 g ai/ha | | 60.00 |
| Glufosinate @ 1200 g ai/ha | | 71.67 |
| Haloxyfop-P-methyl @ 200 g ai/ha + Glufosinate @ 560 g ai/ha | 60.67 | 68.33 |
| Haloxyfop-P-methyl @ 200 g ai/ha + Glufosinate @ 835 g ai/ha | 60.67 | 70.00 |
| Haloxyfop-P-methyl @ 200 g ai/ha + Glufosinate @ 1200 g ai/ha | 72.14 | 78.33 |

Table 31

| DAT | 14 | |
|---|---|---|
| Weed | *Commelina benghalensis* | |
| Doses | Expected ($E^C$) | Observed |
| Haloxyfop-P-methyl @ 260 g ai/ha | | 10.00 |
| Glufosinate @ 560 g ai/ha | | 53.33 |
| Glufosinate @ 835 g ai/ha | | 58.33 |
| Glufosinate @ 1200 g ai/ha | | 71.67 |
| Haloxyfop-P-methyl @ 260 g ai/ha + Glufosinate @ 560 g ai/ha | 58.00 | 63.33 |
| Haloxyfop-P-methyl @ 260 g ai/ha + Glufosinate @ 835 g ai/ha | 62.50 | 70.00 |
| Haloxyfop-P-methyl @ 260 g ai/ha + Glufosinate @ 1200 g ai/ha | 74.50 | 81.67 |

Table 32

| DAT | 14 | |
|---|---|---|
| Weed | *Euphorbia hirta* | |
| Doses | Expected ($E^C$) | Observed |
| Haloxyfop-P-methyl @ 260 g ai/ha | | 11.67 |
| Glufosinate @ 560 g ai/ha | | 60.00 |
| Glufosinate @ 835 g ai/ha | | 68.33 |
| Glufosinate @ 1200 g ai/ha | | 75.00 |
| Haloxyfop-P-methyl @ 260 g ai/ha + Glufosinate @ 560 g ai/ha | 64.67 | 70.00 |
| Haloxyfop-P-methyl @ 260 g ai/ha + Glufosinate @ 835 g ai/ha | 72.03 | 81.67 |
| Haloxyfop-P-methyl @ 260 g ai/ha + Glufosinate @ 1200 g ai/ha | 77.92 | 86.67 |

Table 33

| DAT | 14 | |
|---|---|---|
| Weed | *Portulaca oleracea* | |
| Doses | Expected ($E^C$) | Observed |
| Haloxyfop-P-methyl @ 260 g ai/ha | | 5.00 |

(continued)

| DAT | 14 | |
|---|---|---|
| Weed | *Portulaca oleracea* | |
| Doses | Expected ($E^C$) | Observed |
| Glufosinate @ 560 g ai/ha | | 60.00 |
| Glufosinate @ 835 g ai/ha | | 60.00 |
| Glufosinate @ 1200 g ai/ha | | 71.67 |
| Haloxyfop-P-methyl @ 260 g ai/ha + Glufosinate @ 560 g ai/ha | 62.00 | 66.67 |
| Haloxyfop-P-methyl @ 260 g ai/ha + Glufosinate @ 835 g ai/ha | 62.00 | 70.00 |
| Haloxyfop-P-methyl @ 260 g ai/ha + Glufosinate @ 1200 g ai/ha | 73.08 | 78.33 |

Therefore, it was concluded that the combination of Glufosinate and Haloxyfop-P-methyl showed far more superior effect on *Euphorbia hirta, Commelina benghalensis* and *Portulaca oleracea* weeds than when treated alone with either of the two herbicides.

## Claims

1. A process of controlling broadleaved weeds selected from the family *Euphorbiaceae, Portulacaceae* and *Commelinaceae* comprising applying an herbicidally effective amount of a combination comprising glufosinate, its agriculturally acceptable salts, isomers, or esters thereof; and haloxyfop, its agriculturally acceptable salts, isomers, or esters thereof, preferably wherein the combination is in the form of a composition.

2. A process as claimed in claim 1 wherein said broadleaved weeds are selected from *euphorbia hirta, portulaca oleraceae,* and *commelina bengalhensis.*

3. A process as claimed in claim 1, wherein said combination comprises glufosinate ammonium and haloxyfop-p-methyl.

4. A process as claimed in claim 1 wherein glufosinate is applied at a rate of 50g/ha to 2000g/ha, preferably at a rate of 240g/ha to 1500g/ha.

5. A process as claimed in claim 1 wherein haloxyfop is applied at a rate of 10g/ha to 300g/ha, preferably at a rate of 40g/ha to 240g/ha.

6. A process as claimed in claim 1 wherein, glufosinate and haloxyfop are applied to the locus of undesirable vegetation.

7. A process as claimed in claim 1 wherein glufosinate and haloxyfop are applied to the locus of undesirable vegetation in crop/non crop habitat.

8. A process as claimed in claim 1 wherein glufosinate and haloxyfop are applied for post-emergent control of said weeds.

9. A process as claimed in claim 1 wherein glufosinate and haloxyfop are applied sequentially.

10. A process as claimed in claim 1 wherein glufosinate and haloxyfop are applied together.

11. A process as claimed in claim 1 wherein said combination further comprises other crop protection agents.

12. A process as claimed in claim 1 wherein said combination further comprises adjuvants and other excipients conventionally used in agrochemical formulations.

## Patentansprüche

1. Verfahren zum Bekämpfen von breitblättrigen Unkräutern, ausgewählt aus der Familie der *Euphorbiaceae, Portulacaceae* und *Commelinaceae,* umfassend das Aufbringen einer herbizid wirksamen Menge einer Kombination, die Glufosinat, seine landwirtschaftlich unbedenklichen Salze, Isomere oder Ester davon; und Haloxyfop, seine landwirtschaftlich unbedenklichen Salze, Isomere oder Ester davon umfasst, vorzugsweise wobei die Kombination in der Form einer Zusammensetzung vorliegt.

2. Verfahren nach Anspruch 1, wobei die breitblättrigen Unkräuter ausgewählt sind aus *Euphorbia hirta, Portulaca oleraceae* und *Commelina bengalhensis.*

3. Verfahren nach Anspruch 1, wobei die Kombination Glufosinatammonium und Haloxyfop-p-methyl umfasst.

4. Verfahren nach Anspruch 1, wobei Glufosinat mit einer Rate von 50 g/ha bis 2000 g/ha, vorzugsweise mit einer Rate von 240 g/ha bis 1500 g/ha angewendet wird.

5. Verfahren nach Anspruch 1, wobei Haloxyfop mit einer Rate von 10 g/ha bis 300 g/ha, vorzugsweise mit einer Rate von 40 g/ha bis 240 g/ha angewendet wird.

6. Verfahren nach Anspruch 1, wobei Glufosinat und Haloxyfop auf die Stelle unerwünschter Vegetation angewendet werden.

7. Verfahren nach Anspruch 1, wobei Glufosinat und Haloxyfop auf die Stelle unerwünschter Vegetation in Kulturpflanzen-/Nichtkulturpflanzenhabitat angewendet werden.

8. Verfahren nach Anspruch 1, wobei Glufosinat und Haloxyfop für die Bekämpfung der Unkräuter nach dem Auftauchen angewendet werden.

9. Verfahren nach Anspruch 1, wobei Glufosinat und Haloxyfop nacheinander angewendet werden.

10. Verfahren nach Anspruch 1, wobei Glufosinat und Haloxyfop zusammen angewendet werden.

11. Verfahren nach Anspruch 1, wobei die Kombination ferner andere Pflanzenschutzmittel umfasst.

12. Verfahren nach Anspruch 1, wobei die Kombination ferner Adjuvantien und andere Hilfsstoffe umfasst, die herkömmlicherweise in agrochemischen Formulierungen verwendet werden.

## Revendications

1. Procédé de contrôle des mauvaises herbes à feuilles larges choisies parmi la famille des *Euphorbiaceae,* des *Portulacaceae* et des *Commelinaceae* comprenant l'application d'une quantité efficace sur le plan herbicide d'une combinaison comprenant du glufosinate, ses sels, isomères, ou esters acceptables sur le plan agricole ; et de l'haloxyfop, ses sels, isomères, ou esters acceptables sur le plan agricole, de préférence dans lequel la combinaison est sous la forme d'une composition.

2. Procédé selon la revendication 1 dans lequel lesdites mauvaises herbes à feuilles larges sont choisies parmi *euphorbia hirta, portulaca oleraceae,* et *commelina bengalhensis.*

3. Procédé selon la revendication 1, dans lequel ladite combinaison comprend du glufosinate-ammonium et de l'haloxyfop-p-méthyle.

4. Procédé selon la revendication 1 dans lequel le glufosinate est appliqué à un taux de 50 g/ha à 2 000 g/ha, de préférence à un taux de 240 g/ha à 1 500 g/ha.

5. Procédé selon la revendication 1 dans lequel l'haloxyfop est appliqué à un taux de 10 g/ha à 300 g/ha, de préférence à un taux de 40 g/ha à 240 g/ha.

**6.** Procédé selon la revendication 1 dans lequel, le glufosinate et l'haloxyfop sont appliqués au locus de la végétation indésirable.

**7.** Procédé selon la revendication 1 dans lequel le glufosinate et l'haloxyfop sont appliqués au locus de la végétation indésirable dans un habitat cultivé/non cultivé.

**8.** Procédé selon la revendication 1 dans lequel le glufosinate et l'haloxyfop sont appliqués pour le contrôle post-levée desdites mauvaises herbes.

**9.** Procédé selon la revendication 1 dans lequel le glufosinate et l'haloxyfop sont appliqués de manière séquentielle.

**10.** Procédé selon la revendication 1 dans lequel le glufosinate et l'haloxyfop sont appliqués ensemble.

**11.** Procédé selon la revendication 1 dans lequel ladite combinaison comprend en outre d'autres agents de protection des cultures.

**12.** Procédé selon la revendication 1 dans lequel ladite combinaison comprend en outre des adjuvants et d'autres excipients utilisés conventionnellement dans des formulations agrochimiques.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 2717440 A
- US 4168963 A
- US 7105470 B